Europäisches Patentamt

(19) European Patent Office

Office européen des brevets

(11) Publication number: **0 298 772 B1**

(12) **EUROPEAN PATENT SPECIFICATION**

(45) Date of publication of patent specification :
27.12.91 Bulletin 91/52

(51) Int. Cl.⁵ : **B01J 19/00**, C01B 3/38,
B01J 8/06

(21) Application number : 88306274.7

(22) Date of filing : 08.07.88

(54) Chemical reactor.

Divisional application 90203205.1 filed on
08/07/88.

(30) Priority : 10.07.87 JP 172614/87
10.07.87 JP 172615/87

(43) Date of publication of application :
11.01.89 Bulletin 89/02

(45) Publication of the grant of the patent :
27.12.91 Bulletin 91/52

(84) Designated Contracting States :
DE FR GB

(56) References cited :
WO-A-86/02016
FR-A- 1 327 210
PATENT ABSTRACTS OF JAPAN, vol. 8, no. 71
(C-217)[1508], 3rd April 1984; & JP-A-58 223 603
(MATSUSHITA DENKI SANGYO K.K.) 26-
12-1983

(73) Proprietor : TOKYO INSTITUTE OF
TECHNOLOGY
12-1 Ohokayama 2-chome Meguro-ku
Tokyo (JP)
Proprietor : ISHIKAWAJIMA-HARIMA
JUKOGYO KABUSHIKI KAISHA
2-1, Ote-machi 2-chome
Chiyoda-ku Tokyo 100 (JP)
Proprietor : KABUSHIKI KAISHA KOBE SEIKO
SHO
3-18 Wakinohama-cho 1-chome Chuo-ku
Kobe 651 (JP)
Proprietor : CHIYODA CORPORATION
12-1, Tsurumichuo 2-chome Tsurumi-ku
Yokohama 230 (JP)
Proprietor : KABUSHIKI KAISHA TOSHIBA
72, Horikawa-cho Saiwai-ku
Kawasaki-shi Kanagawa-ken (JP)

Proprietor : Ryoka Techno Engineering &
Construction Co.
2-12, Sendagaya 4-chome
Shibuya-ku Tokyo 151 (JP)
Proprietor : MITSUBISHI JUKOGYO
KABUSHIKI KAISHA
5-1, Marunouchi 2-chome Chiyoda-ku
Tokyo 100 (JP)
Proprietor : MITSUBISHI PETROCHEMICAL
ENGINEERING CO., LTD.
5-4, Nihonbashi Bakuro-cho 1-chome
Chuo-ku Tokyo (JP)

(72) Inventor : Echigo, Ryozo
3-17-603, Ecchujima 1-chome Kohtoh-ku
Tokyo (JP)
Inventor : Yoshizawa, Yoshio
10-36, O-okayama 2-chome Meguro-Ku
Tokyo (JP)
Inventor : Ikeda, Mikio
5-35-2, Rokkodai
Matsudo-shi Chiba-ken (JP)
Inventor : Aoki, Mamoru
26-18, Yokoo 2-chome Suma-ku
Kobe-shi Hyogo-ken (JP)
Inventor : Shimizu, Ryosuke
1-18-1, Shitanoya-cho Tsurumi-ku
Yokohama-shi Kanagawa-ken (JP)
Inventor : Onomura, Masaki
21-6, Honamanuma 2-chome Suginami-ku
Tokyo (JP)
Inventor : Iwasa, Koichi
137-28, Hachigasaki
Matsudo-shi Chiba-ken (JP)
Inventor : Ide, Yuichi
191, Fukabori-machi 3-chome
Nagasaki-shi Nagasaki-ken (JP)
Inventor : Yamana, Noboru
4098-21, Yatabe, Hasaki-machi
Kashima-gun Ibaraki-ken (JP)

(74) Representative : Jennings, Nigel Robin et al
KILBURN & STRODE 30 John Street
London WC1N 2DD (GB)

## Description

The present invention relates to a chemical reactor which utilises heat to effect the decomposition of a raw gas mixture and is concerned with that type of reactor which has two chambers separated by a partition wall, a porous heat radiating body being disposed in one of the chambers and a porous heat-receiving body in which a catalyst is dispersed being disposed in the other chamber whereby, in use, the heat radiating body is heated by high temperature combustion gas flowing through it and transmits heat to the heat-receiving body which heats a raw gas mixture flowing through it and causes it to react.

It is known to use such a chemical reactor in the production of hydrogen gas, by subjecting a raw gas mixture comprising $CH_4$ and $H_2O$ to a steam-reforming reaction represented by $CH_4 + H_2O \rightarrow CO + 3H_2$, thereby obtaining a generated gas mixture comprising $H_2$ and CO.

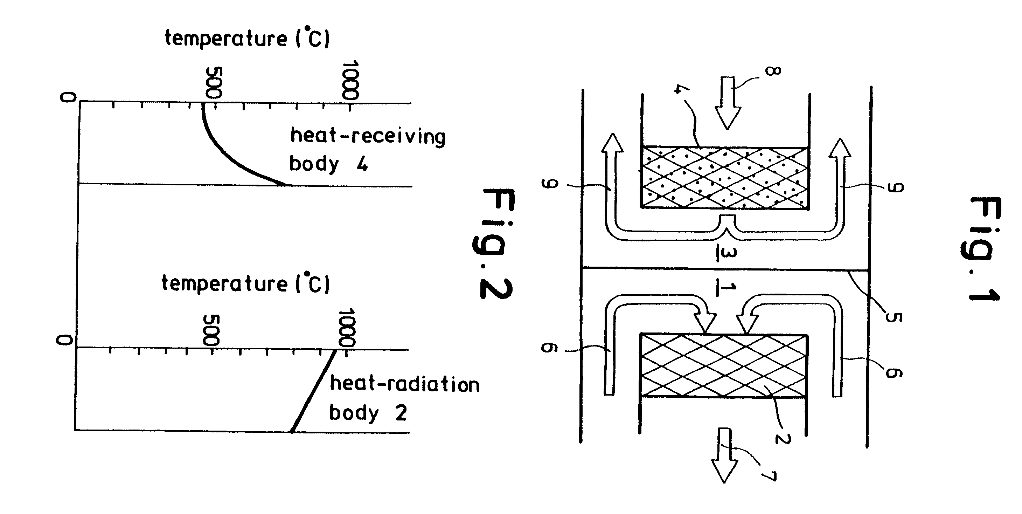

A known reactor of the type referred to above is illustrated diagrammatically in Figure 1. This reactor comprises a combustion chamber 1 which accommodates a porous heat radiation body 2 and a heat-receiving chamber 3 which accommodates a porous heat-receiving body 4 which carries catalysts uniformly distributed throughout the body and whose pores are of substantially the same diameter throughout. The chambers 1 and 3 are separated by a partition wall 5 to prevent gas leakage between them.

In use, a high-temperature combustion gas 6 obtained by combustion of a fuel flows through the heat radiation body 2 and is then discharged as an exhaust gas 7. The combustion gas 6 has sensible heat which is absorbed by convection heat transfer by the heat radiation body 2 during its passage through it so that the heat radiation body 2 is heated and emits radiant heat. The radiant heat emitted by the body 2 is received by the heat-receiving body 4 in the form of re-radiated heat from the partition wall 5, if the wall 5 is made of metal or ceramic material or by way of transmission through the wall 5 if the wall 5 is made of transparent material such as quartz glass, whereby the heat-receiving body 4 is heated.

A raw gas mixture 8 comprising $CH_4$ and $H_2O$ passes through the heat-receiving body 4 and is heated and decomposed thereby to produce a generated gas mixture 9 comprising $H_2$ and CO which is discharged out of the chemical reactor.

The raw gas mixture 8 is thus caused to decompose in the presence of catalysts by the heat of the body 4 which has been radiated to it by the body 2 to obtain the generated gas mixture 9. Thus, an effective utilisation of heat is achieved and the apparatus for decomposing the raw gas mixture is relatively compact.

Figure 2 shows the temperature distributions in the heat radiation body 2 and the heat-receiving body 4 in the chemical reactor described above in the directions of the gas flows. Whereas the temperature gradient in the heat radiation body 2 is substantially linear, the temperature gradient in the heat-receiving body 4 is curved and concave downwardly. Thus as may be seen, in the conventional chemical reactor, the temperature decreases linearly through the heat radiation body but increases non-linearly at an ever increasing rate in the heat-receiving body 4. Thus the temperature is relatively low in the vicinity of the inlet of the body 4 and suddenly rises towards the outlet of the body 4. In this connection, it is to be noted that the steam-reforming reaction is endothermic and proceeds slowly at low temperatures and is accelerated with an increase in temperature.

Thus, the steam-reforming reaction does not occur to a significant extent at the low temperature side of the heat-receiving body 4 and mainly occurs at the high temperature side thereof. This means that the absorption of heat by the heat-receiving body 4 occurs at the portion thereof closest to the heat radiation body 2 and effective utilisation of the catalysts is not achieved at the low-temperture portion furthest from the heat radiation body 2.

The distribution of the catalyst, which is extremely expensive, throughout the heat-receiving body 4 including its low-temperature portions is therefore wasteful and largely pointless and results in an increase of the capital, operating and maintenance costs.

It is thus an object of the present invention to achieve an effective utilisation of the catalyst material by ensuring that the previously low-temperature portion of the heat-receiving body becomes a high temperature portion.

A further object of the present invention is to reduce the amount of the expensive catalyst material which is necessary so as to reduce the capital, operational and maintenance costs of the reactor.

According to the present invention the porosity of the heat-receiving body increases in the direction of flow of the raw gas mixture through it. The resulting varying ability of the heat-receiving body to absorb radiant heat means that the temperature of that portion of the heat-receiving body which is furthest from the heat radiating body is higher than in the known construction whereby the catalyst material is more effectively utilised. It is preferred that the heat-receiving body is divided into two or more layers in the direction of flow of the raw gas mixture through it, the porosity of each layer differing from that of the or each adjacent layer. Thus the porosity of the layers preferably increases in the direction of flow of the raw gas mixture through the heat receiving body.

Further features and details of the invention will be apparent from the following description of certain specific embodiments which is given by way of example with reference to Figures 3 to 5 of the accompanying drawings, in which :

    Figure 3 is a view similar to Figure 1 of a chemical reactor in accordance with the present invention;

    Figure 4 is a graph illustrating the temperature distribution curves in the directions of the gas flows in the heat radiation body and the heat-receiving body in the chemical reactor shown in Figure 3 ;

    Figure 5 is a diagrammatic view of a practical application of a chemical reactor in accordance with the present invention.

    The same reference numerals are used to designate similar parts throughout the Figures.

    Referring to Figure 3, the porous, catalyst-carrying heat-receiving body 4 is divided into a plurality, in this case three, heat-receiving layers 4a, 4b and 4c in that order in the direction of the gas flow. The porosity or mean pore diameter of the layer 4a is smaller than that of the layer 4b which in turn is smaller than that of the layer 4c, whose porosity is largest. It will be appreciated that the porosity of the body 4 may vary by having differing numbers of pores of the same size in any transverse plane or the same number of pores of differing diameter, or a combination of the two.

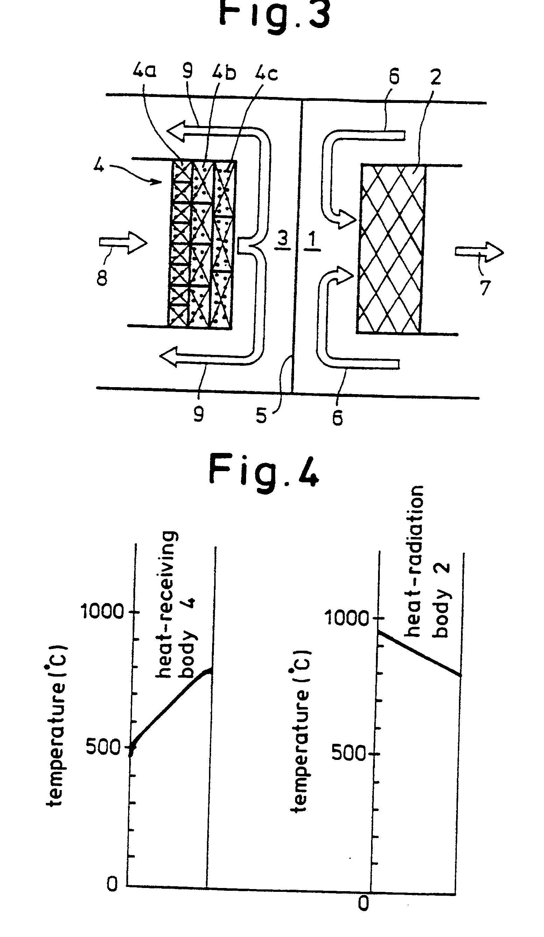

    Due to the difference in the resultant radiation absorption capabilities of the layers in the heat-receiving body 4, the temperature gradient in the heat-receiving body 4 is linear, as shown in Figure 4 and the temperatures at intermediate positions in the heat-receiving body 4 are higher than those shown in Figure 2 so that the reaction proceeds well even at the raw-gas-mixture inlet and the required amount of decomposed products can be obtained by action of the catalyst region which is thinner than in the known reactor, As a result, the amount of catalyst which is necessary is decreased.

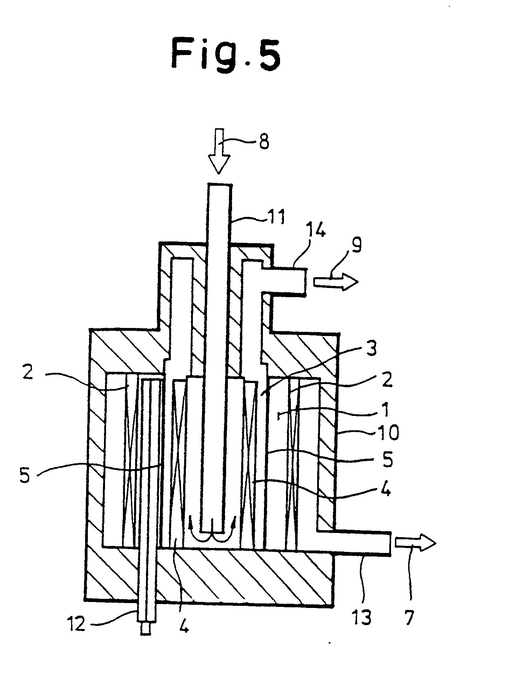

    Figure 5 shows a practical application of the present invention. A raw-gas-mixture feed pipe 11 extends centrally into a cylindrical vessel 10 with its lower end open. Cylindrical porous heat radiation and heat-receiving bodies 2 and 4 are disposed coaxially around the feed pipe 11. A cylindrical partition wall 5 is disposed between the heat radiation and heat-receiving bodies 2 and 4 to define a combustion chamber 1 between the partition wall 5 and the heat radiation body 2 and a heat-receiving chamber 3 between the partition wall 5 and the heat-receiving body 4. A burner 12 for supplying fuel and air (i.e. a combustion mixture) extends through the bottom of the cylindrical vessel 10 into the combustion chamber 1. An exhaust gas pipe 13 communuicates with the lower portion of the vessel 10 to discharge the exhaust gas 7 after it has passed through the heat radiation body 2. A generated-gas outlet pipe 14 communicates with the upper portion of the vessel 10 to discharge the generated gas mixture 9 out of the heat-receiving chamber 3. The heat-receiving body 4 is constructed as shown in Figure 3.

    The combustion mixture injected from the burner 12 is burned to produce a high-temperature gas which heats the heat radiation body 2 when the gas flows through it. Radiant heat from the heat radiation body 2 heats the heat-receiving body 4 and the exhaust gas which has flowed through the heat radiation body 2 is discharged through the exhaust pipe 13 to the exterior.

    The raw gas mixture 8 is fed through the feed pipe 11 centrally to the cylindrical vessel 10, heated and decomposed into the generated gas mixture 9 while flowing through the heat-receiving body 4 and is discharged through the outlet pipe 14 to the exterior.

    It will be understood that the present invention is not restricted to the embodiment described above and that various modifications may be effected. For example, the raw gas mixture does not necessarily comprise $CH_4$ and $H_2O$ and the $CH_4$ may be replaced by other endothermic reaction type gases. The catalyst-carrying heat-receiving body is not necessarily disposed in opposing relationship with the heat radiation body, but may be disposed on the side away from the heat radiation body. The raw gas mixture may also flow in a direction away from the heat radiation body.

## Claims

    1. A chemical reactor having two chambers (1, 3) separated by a partition wall (5), a porous heat radiating body (2) being disposed in one of the chambers (1) and a porous heat-receiving body (4) in which a catalyst is dispersed being disposed in the other chamber (3), whereby, in use, the heat radiating body (2) is heated by high temperature combustion gas (6) flowing through it and transmits heat to the heat-receiving body (4) which heats a raw gas mixture (8) flowing through it and causes it to react, characterised in that the porosity of the heat-receiving body (4) increases in the direction of flow of the raw gas mixture through it.

    2. A reactor as claimed in claim 1 characterised in that the heat-receiving body (4) is divided into two or more layers (4a, 4b, 4c) in the direction of flow of the raw gas mixture through it, the porosity of each layer differing from that of the or each adjacent layer.

## Patentansprüche

    1. Chemischer Reaktor, der zwei durch eine Trennwand (5) getrennte Kammern (1,3), einen porösen, Wärme abstrahlenden Körper (2), der in einer der beiden Kammern (1) angeordnet ist, und einen porösen, Wärme aufnehmenden Körper, der in der anderen Kammer (3) angeordnet und in dem ein Katalysator verteilt ist, aufweist, wobei während des Gebrauchs der Wärme abstrahlende Körper (2) von Verbrennungsgas (6) hoher Temperatur erhitzt wird, das ihn durchströmt, und Wärme an den Wärme aufnehmenden Körper (4) überträgt, der ein Rohgasgemisch (8), das ihn durchströmt, erhitzt und zur Reaktion bringt, dadurch gekennzeichnet, daß die Porosität des Wärme aufnehmenden Körpers (4) in der Strömungsrichtung des Rohgasgemischs durch ihn zunimmt.

2. Reaktor nach Anspruch 1, dadurch gekennzeichnet, daß der Wärme aufnehmende Körper (4) in Strömungsrichtung des Rohgasgemischs durch ihn in zwei oder mehrere Schichten (4a, 4b, 4c) aufgeteilt ist, wobei die Porosität jeder Schicht von der der oder jeder benachbarten Schicht verschieden ist.

## Revendications

1. Réacteur chimique comportant deux chambres (1, 3) séparées par une paroi de séparation (5) un corps poreux de rayonnement de la chaleur (2) étant disposé dans une des chambres (1) et un corps poreux de réception de la chaleur (4) dans laquelle un catalyseur est dispersé étant disposé dans l'autre chambre (3), si bien qu'en utilisation le corps de rayonnement de la chaleur (2) est chauffé par un gaz de combustion à température élevée (6) s'écoulant à travers celui-ci et communique la chaleur au corps de réception de la chaleur (4) qui chauffe un mélange de gaz brut (8) s'écoulant à travers celui-ci et amène celui-ci à réagir, caractérisé en ce que la porosité du corps de réception de la chaleur (4) augmente dans le sens de l'écoulement du mélange de gaz brut à travers celui-ci.

2. Réacteur selon la revendication 1, caractérisé en ce que le corps de réception de la chaleur (4) est divisé en deux ou plus couches (4a, 4b, 4c) dans le sens de l'écoulement du mélange de gaz brut à travers celui-ci, la porosité de chaque couche différent de celle de la ou des couches adjacentes.

# Fig.1

# Fig.2

# Fig.3

# Fig.4

# Fig.5